Europäisches Patentamt

European Patent Office

Office européen des brevets

(19)

(11) Veröffentlichungsnummer : **0 351 404 B1**

(12) **EUROPÄISCHE PATENTSCHRIFT**

(45) Veröffentlichungstag der Patentschrift :
27.05.92 Patentblatt 92/22

(51) Int. Cl.⁵ : **H04L 7/02**

(21) Anmeldenummer : **88900769.6**

(22) Anmeldetag : **16.01.88**

(86) Internationale Anmeldenummer :
**PCT/DE88/00019**

(87) Internationale Veröffentlichungsnummer :
**WO 88/07294 22.09.88 Gazette 88/21**

(54) **VERFAHREN ZUR TAKTSYNCHRONISATION.**

(30) Priorität : **11.03.87 DE 3707760**

(43) Veröffentlichungstag der Anmeldung :
**24.01.90 Patentblatt 90/04**

(45) Bekanntmachung des Hinweises auf die
Patenterteilung :
**27.05.92 Patentblatt 92/22**

(84) Benannte Vertragsstaaten :
**AT CH FR GB IT LI SE**

(56) Entgegenhaltungen :
**EP-A- 0 173 569**

(56) Entgegenhaltungen :
**Patent Abstracts of Japan, Band 5, Nr. 176
(E-81) (848), 12 November 1981, & JP A
56102142
IEEE Transactions on Communications, Band
22, Nr. 1, Januar 1974; J.K. Holmes et al.: "A
second-order all-digitalphase-locked loop",
Seiten 62-68**

(73) Patentinhaber : **ANT Nachrichtentechnik
GmbH
Gerberstrasse 33
W-7150 Backnang (DE)**

(72) Erfinder : **HESPELT, Volker
Lichtensteinstrasse 44
W-7150 Backnang (DE)**
Erfinder : **ALBERTY, Thomas
Danziger Strasse 28
W-7150 Backnang (DE)**

EP 0 351 404 B1

## Beschreibung

Die Erfindung bezieht sich auf ein Verfahren gemäß dem Oberbegriff des Anspruchs 1.

Solche Verfahren sind bekannt, beispielsweise durch den Aufsatz von Gardner: "A BPSK/QPSK Timing-Error Detector for Sampled Receivers" in IEEE Com.-34, No. 5, Mai 1986, Seiten 423 - 429, /1/.

Bei der digitalen Datenübertragung ist es wesentlich, daß der Empfänger aus den Empfangsdaten den exakten Abtastzeitpunkt ableitet. Hierzu wird in einem Taktphasendetektor durch nichtlineare Operationen ein Ausgangssignal $uT_I$ erzeugt, dessen Grundschwingung der Taktfrequenz entspricht und aus dessen Nulldurchgängen der Abtastzeitpunkt abgeleitet werden kann.

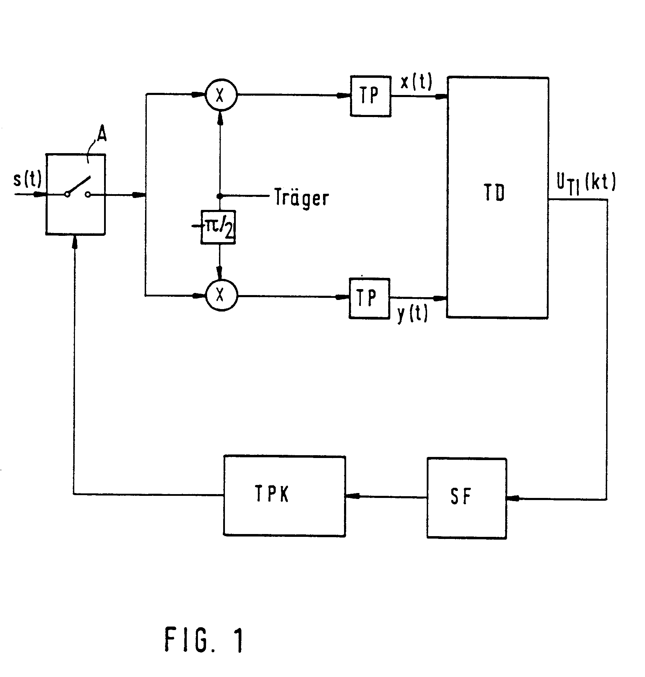

Die Figur 1 zeigt eine in der Literaturstelle /1/ angegebene Taktregelschleife, wie sie z.B. bei QPSK-Datenübertragung Verwendung findet. Das eingehende Empfangssignal s(t) wird demoduliert, indem ihm das Trägersignal einmal direkt und einmal um $-\pi/2$ phasenverschoben multiplikativ zugeführt wird. Mittels Tiefpässen TP werden die Produkte der doppelten Frequenz unterdrückt. Die Normalkomponente, Realteil x(t), und die Quadratur-Komponente, Imaginärteil y(t), des demodulierten Eingangssignals werden den Ausgängen der Tiefpässe entnommen und einem nachfolgenden Taktphasendetektor TD zugeführt. Dessen Ausgangssignal $u_{TI}$ wird über ein Schleifenfilter (SF) einer Taktphasenkorrektureinrichtung TPK zugeführt, welche eine Abtasteinrichtung A, die beispielsweise das nicht demodulierte oder das demodulierte Eingangssignal abtastet, ansteuert. Eine solche Abtastung ist notwendig, wenn die Signale im Empfänger zeitdiskret verarbeitet werden sollen. In Figur 1 wird beispielsweise die Abtastung vor der Demodulation durchgeführt. Eine solche Abtastung könnte jedoch auch an beliebig anderer Stelle vorgenommen werden, beispielsweise nach der Demodulation oder nach der Tiefpaßfilterung. Es sei hier davon ausgegangen, daß das Ausgangssignal des Taktphasendetektors als abgetastetes Signal $u_{TI}(kT)$ vorliegt, wobei T das Symbol-Intervall oder die Schrittlänge ist, welche nach der Beziehung $f_{Nyq} = 1/2T$ von der Nyquistfrequenz $f_{Nyq}$ abhängt. Die Abtastphase des im Empfänger vorhandenen Abtasters A wird über das Schleifenfilter SF und über die Taktphasen-Korrekturschaltung TPK so lange geändert, bis die Abtastwerte am Taktphasendetektorausgang im Mittel zu Null werden:

$$\overline{u}_{TI}(k \cdot T) = 0,$$

wobei k als ganze Zahl die Takte nummeriert.

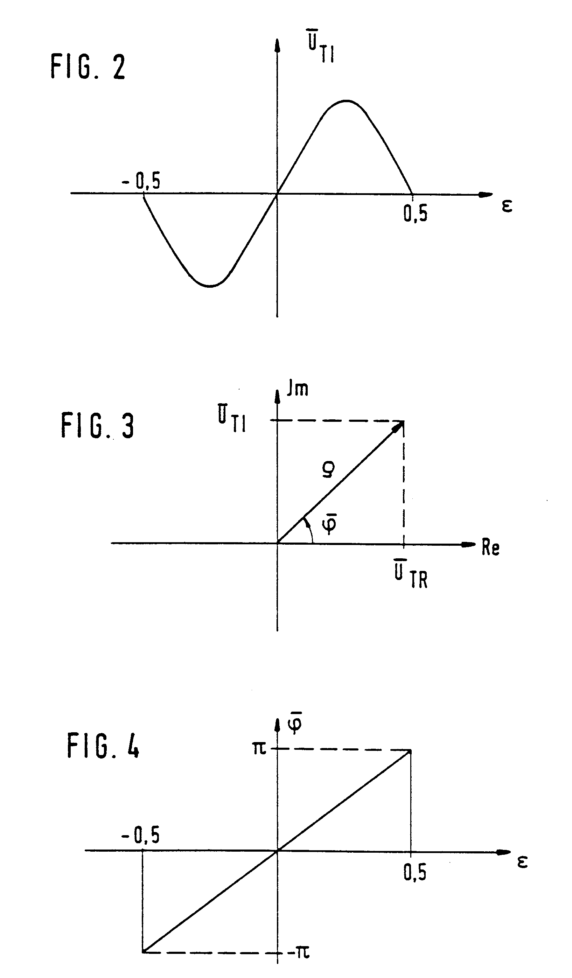

Die Figur 2 zeigt eine typische Kennlinie eines Taktphasendetektors. In Abszissenrichtung ist die Abtastphase $\varepsilon$, d.h. die Abweichung $\Delta t/T$ der tatsächlichen Abtastzeitpunkte von den richtigen Abtastzeitpunkten (im Kohärenzfall von Sender- und Empfangstakt ist $\varepsilon = 0$), und in Ordinatenrichtung sind die Mittelwerte von $u_{TI}$ aufgetragen. Für $\varepsilon = 0$ und $\varepsilon = \pm 0,5$ wird jeweils $\overline{u}_{TI} = 0$. Der Mittelpunkt $\varepsilon = 0$ dieser sinusähnlichen Kurve ist stabil, während bei $\varepsilon = \pm 0,5$ die Synchronistation labil verlaufen kann, d.h. daß die Regelung im labilen Punkt sich mehr oder weniger lange aufhängen kann, wodurch die Synchronisationszeit deutlich verlängert wird.

Der vorliegenden Erfindung lag die Aufgabe zugrunde, ein Verfahren der eingangs genannten Art anzugeben, welches in der Lage ist, ein oben geschildertes Hängenbleiben weitgehend zu unterdrücken und eine sehr viel schnellere Synchronisation zu ermöglichen.

Die Lösung erfolgt mit den gekennzeichnet Merkmalen des Anspruches 1. Vorteilhafte Ausgestaltungen ergeben sich durch die abhängigen Ansprüche.

Das erfindungsgemäße Verfahren weist die Vorteile auf, daß es das weiter oben geschilderte Hängenbleiben weitgehend unterdrückt und somit eine sehr viel schnellere Synchronisation ermöglicht. Der zusätliche Aufwand hierfür ist relativ gering.

In der gleichdatierten Patentanmeldung BK 87/18 sind kombinierte Frequenz- und Taktphasendetektoren angegeben, bei denen der Taktphasendetektor zwei Ausgangssignale $u_{TR}$ und $u_{TI}$ erzeugt, welche als Realteil und Imaginärteil eines komplexen Taktphasendetektorausgangssignals $u_T = u_{TR} + ju_{TI}$ interpretiert werden können. Trägt man den Mittelwert von $u_{TR}$ und $u_{IT}$ als Realteil und Imaginärteil in einer komplexen Ebene auf, so ergibt sich ein komplexer Zeiger der Länge $\rho = \sqrt{\overline{u}_{TR}^2 + \overline{u}_{TI}^2}$ mit dem Phasenwinkel $\overline{\varphi} = \arctan \overline{u}_{TI}/\overline{u}_{TR}$, vgl. Figur 3.

Die Verwendung von $\overline{\varphi} = \arctan u_{TI}/u_{TR}$ als Ansteuersignal für die nachfolgende Taktphasenkorrekturschaltung führt zu einem verbesserten Akquisitionsverhalten. Den Zusammenhang zwischen $\varepsilon$ und $\overline{\varphi}$ gibt die Figur 4 wieder.

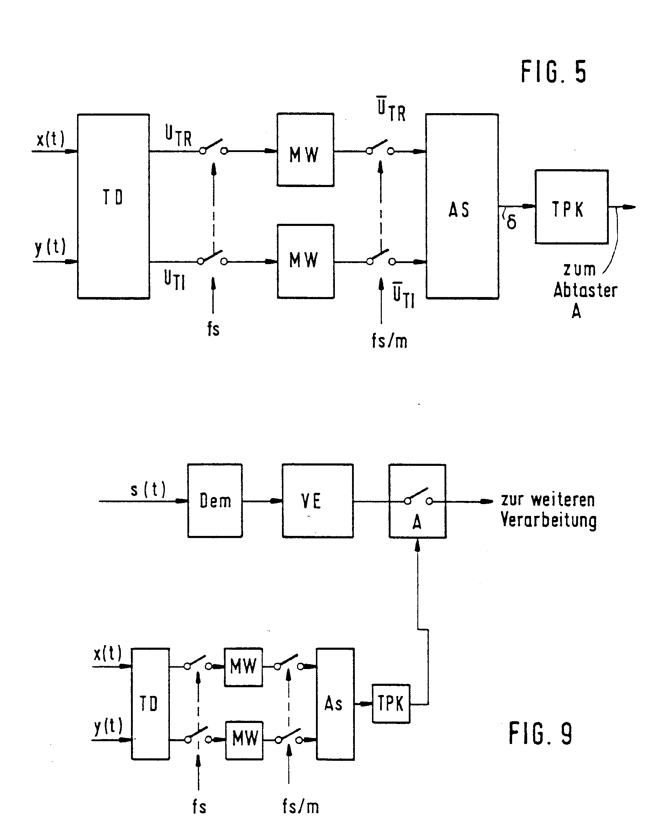

Anhand der Figur 5, welche eine erfindungsgemäße Anordnung darstellt, wird nun das erfindungsgemäße Verfahren beschrieben. Mit Hilfe eines Taktphasendetektors TD, wie er in der Patentanmeldung BK 87/18, /2/ beschrieben ist, werden Realteil $u_{TR}$ und Imaginärteil $u_{TI}$ der Taktschwingung erzeugt. Realteil und Imaginärteil sollen entweder bereits als Abtastwerte $u_{TR}(k \cdot T)$, $u_{TI}(k \cdot T)$ vorliegen, oder sie werden mit der Abtastfrequenz $f_S : 1/T$ abgetastet, wobei die Abtastphase bzw. deren Abweichung $\varepsilon = \Delta t/T$ sei. Eine solche Abtastung der beiden Ausgangssignale des Taktphasendetektors TD ist in Figur 5 dargestellt. Die Abtastwerte (Samples) der beiden Komponenten werden anschließend in Mittelwertbildnern MW über m Takte gemittelt.

In Sonderfällen ist auch m = 1, d.h. keine Mittelung möglich. Nach der Mittelungszeit m . T werden die Mittelwerte einer Auswerteschaltung AS zugeführt, welche eine Verstell- oder Steuerinformation $\delta$ an die sich anschließende Taktphasenkorrekturschaltung TPK abgibt. Diese wiederum gibt den Abtasttakt mit einer um $\delta$ korrigierten Abtastphase ab.

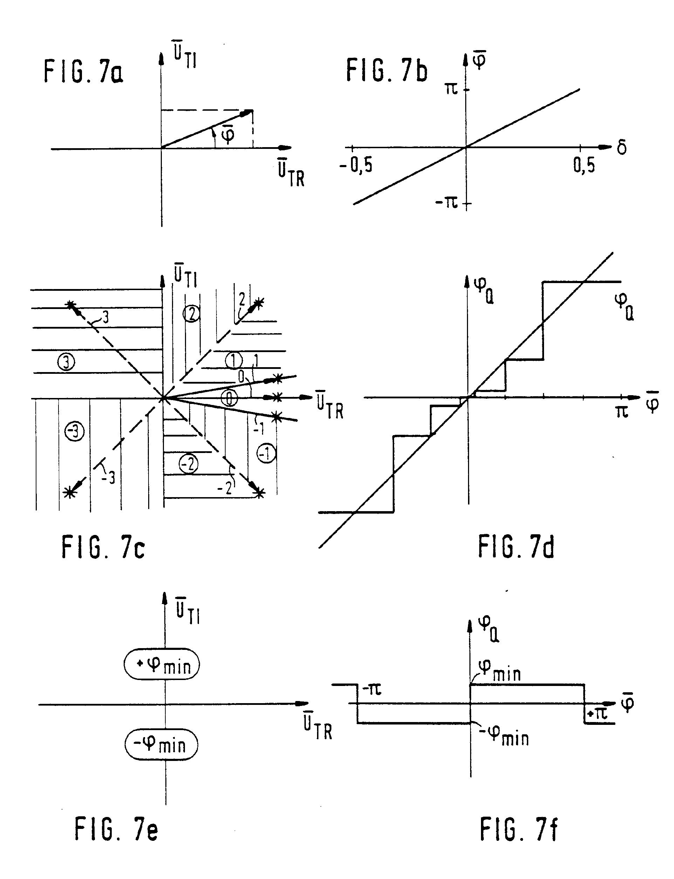

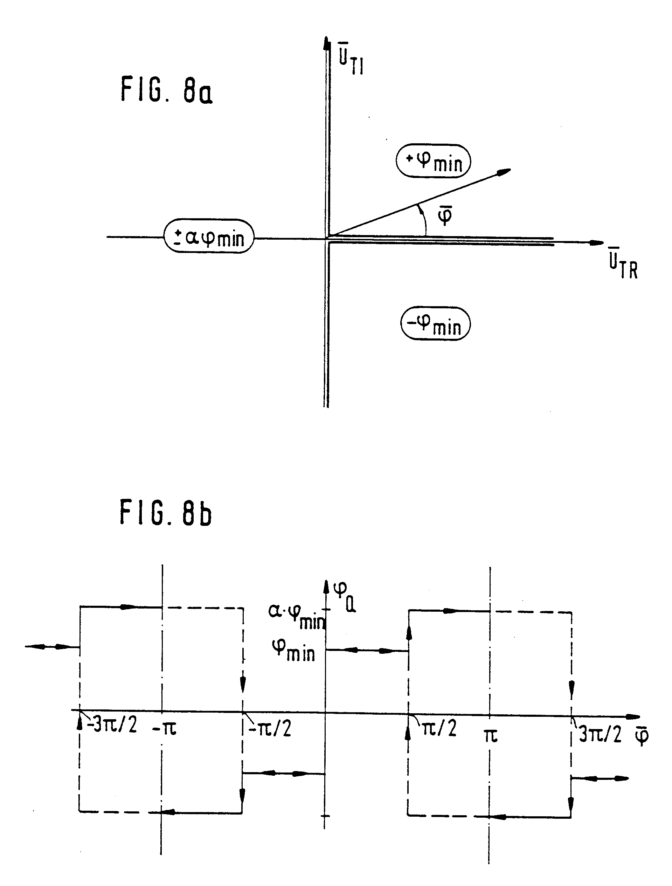

Die Funktion der Auswerteschaltung AS wird an Hand der Figuren 7 und 8 erläutert. Beide Figuren geben mehrere Möglichkeiten der Auswertung der beiden Mittelwertgrößen an.

Eine erste Verfahrensmöglichkeit ist in den Figuren 7a und 7b erkennbar. Aus den beiden Mittelwerten $\overline{u}_{TR}$ und $\overline{u}_{TI}$ wird die Phase

$\overline{\varphi}$ = arc tan $\overline{u}_{TI}/\overline{u}_{TR}$ gebildet. Zwischen der Phase $\overline{\varphi}$ und $\delta$ gilt der lineare Zusammenhang $\delta$ = 0,5 . $\overline{\varphi}/\pi$ gemäß Figur 7b. Die genaue Bestimmung der Phase $\overline{\varphi}$ ist etwas aufwendig. Sie vereinfacht sich, wenn in der $\overline{u}_{TR}$, $\overline{u}_{TI}$-Ebene Gebiete gebildet werden, die einfach abzufragen sind, und wenn diesen Gebieten feste Phasenwerte $\varphi_Q$ zugewiesen werden.

Diese zweite Verfahrensweise ist in den Figuren 7c und d dargestellt. In Figur 7c wird den durch Schraffur und durch Ziffern in Kreisfeldern gekennzeichneten Gebieten jeweils ein Zeiger zugeordnet, welcher mit der gleichen Ziffer bezeichnet ist. Die Sternchen stellen jeweils die Zeigerspitzen dar. Jedem Gebiet wird also als $\varphi_Q$ die Phase des entsprechenden Zeigers zugeordnet. Dies entspricht einer in Figur 7d angegebenen Quantisierung von $\overline{\varphi}$. Der lineare Zusammenhang zwischen $\delta$ und $\overline{\varphi}$ nach Figur 7a geht damit in eine Treppenkurve über nach Figur 7d, wobei gilt

$\delta$= 0,5 . $\varphi_Q/\pi$ und

wobei die Zuordnung der Gebiete zu den fixen Phasenwerten der Tabelle nach Anspruch 5 entnehmbar sind. Die Gebietsaufteilung nach Figur 7c ist lediglich ein Beispiel. Selbstverständlich können auch andere Gebietsaufteilungen realisiert werden, sie unterscheiden sich in der Höhe des Aufwandes für die Abfragelogik.

Eine dritte Verfahrensweise gemäß der Figuren 7e und. 7f ist sehr aufwandsarm. Hier wird für positive Phasen $\overline{\varphi}$ der quantisierte Wert $\varphi_Q = \varphi_{min}$ und für negative Phasen $\overline{\varphi}$ der quantisierte Wert $\varphi_Q = -\varphi_{min}$ festgelegt, wodurch $\delta$= $\pm\delta_{min}$ = $\pm$0,5 .$\varphi_{min}/\pi$ wird. Bei diesem Verfahren wird also nur das Vorzeichen des Imaginärteils $u_{TI}$ ausgewertet und die Ansteuergröße $\delta$ nach der Beziehung $\delta=\delta_{min}$. sign($u_{TI}$) realisiert. Bei dieser sehr einfachen Verfahrensweise tritt jedoch wieder das Problem des Hängenbleibens der Taktregelung auf und zwar bei einem Abtastfehler von $\pm$50%. Das Problem kann jedoch mit der in Figur 8 dargestellten Auswertung verhindert werden. Die Quantisierungskennlinie nach Figur 8b enthält eine Hysterese in den Phasenbereichen $\pi/2 < \overline{\varphi} < 3\pi/2$ < bzw. $-3\pi/2 < \overline{\varphi} < -\pi/2$, während der Bereich $-\pi/2 \leqq \overline{\varphi} \leqq \pi/2$ genau dem entsprechenden Bereich der Quantisierungskennlinie nach Figur 7f entspricht. Die Verwendung einer Hysterese wird z.B. dadurch ermöglicht, daß eine Gebietsnufteilung der komplexen $\overline{u}_{TR}$, $\overline{u}_{TI}$-Ebene in drei Gebiete, nämlich in den 1. Quadranten, in den 4. Quadranten und in ein Gebiet, das den 2. und 3. Quadranten umfaßt, also für negative $\overline{u}_{TR}$-Werte. Für den 1. Quadranten gilt eine Phasenwertzuweisung von +$\varphi_{min}$ und für den 4. Quadranten eine solche von -$\varphi_{min}$. Für den 2. und 3. Quadranten werden Phasenwerte von $\pm\alpha.\varphi_{min}$ zugewiesen, wobei $\alpha \geqq 1$ ist. Die Zuweisung erfolgt allerdings so, daß wenn die Phase $\overline{\varphi}$ aus dem 1. Quadranten heraus vergrößert wird, die Zuweisung weiterhin mit einem positiven Wert + $\varphi_{min}$ oder > + $\varphi_{min}$ erhalten bleibt und erst wenn die Phase aus dem 3. in den 4. Quadranten überwechselt, der dort gültige Phasenwert von -$\varphi_{min}$ zugewiesen wird. Umgekehrt wird, wenn die Phase $\overline{\varphi}$ sich verkleinert und beispielsweise aus dem 4. Quadranten in den 3. und 2. überwechselt, der im 4. Quadranten zugewiesene Phasenwert von -$\varphi_{min}$ beibehalten oder noch weiter verkleinert ($\alpha$ > 1), und erst dann, wenn ein Wechsel stattfinden sollte zwischen dem 2. in den 1. Quadranten der neue dort herrschende Phasenwert + $\varphi_{min}$ wieder zugewiesen. Dei Gebietsaufteilung und die Phasenwertzuweisung ist aus Figur 8a erkennbar. Selbstverständlich kann auch eine andere Gebietsaufteilung realisiert werden. Die hier dargestellte Gebietszuweisung ist allerdings besonders aufwandsarm, sie fordert für den 2. und 3. Quadranten lediglich die Abfrage, ob der Realteil des Mittelwerts des Taktphasendetektor-Ausgangssignals negativ ist.

Gemäß Figur 5 erfolgt die Abtastung von Real- und Imaginärteil des komplexen Ausgangssignals des Taktphasendetektors TD im Abstand der Schrittlänge T, also mit der Taktrate $f_S$ = 1/T.

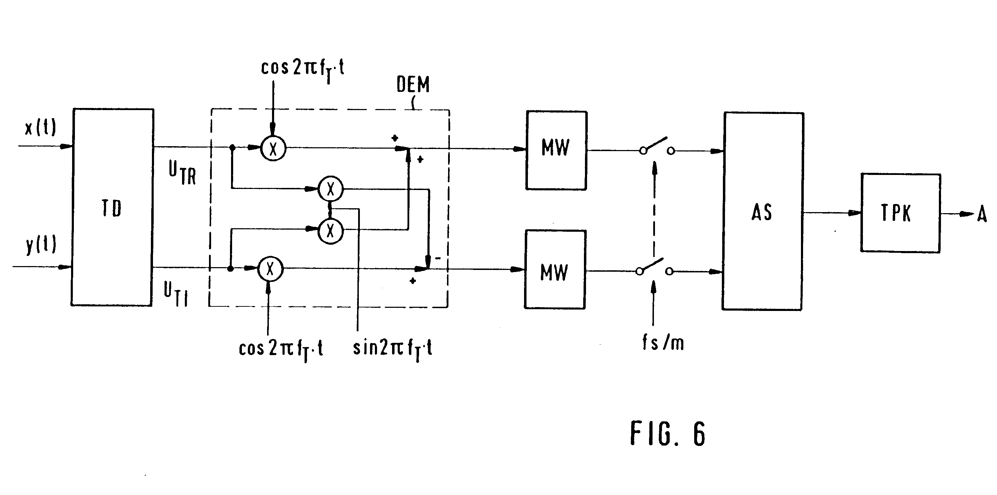

Die Figur 6 zeigt eine Anordnung, bei der die Mittelung analog, z.B. mittels Tiefpässen, ausgeführt wird. Die Abtastung erfolgt hier erst nach den Mittelwertsbildnern und zwar mit der reduzierten Abtastfrequenz $f_S/m$. Die Anforderungen an die anschließende A nalog-Digital-Wandlung wird dadurch ebenfalls reduziert. Im Gegensatz zu Figur 5 ist im Blockschaltbild gemäß Figur 6 zwischen dem Taktphasendetektor TD und den Mittelwertbildnern MW ein Demodulator-Baustein DEM eingefügt, wobei $f_T$ die Taktfrequerz ist.

Zur Korrektur des Abtastzeitpunktes gibt es prinzipiell zwei Möglichkeiten, zum einen eine Rückkopplungsanordnung und zum anderen eine Anordnung zur Vorwärtskorrektur.

Erstere ist in Figur 1 gezeigt. Die Rückkopplungsanordnung zeichnet sich dadurch aus, daß der Taktphasendetektor durch die korrigierte Abtastphase selbst beeinflußt wird. Bei richtiger Abtastphase wird damit das Ausgangssignal des Taktphasendetektors im Mittel zu Null.

Eine Anordnung zur Vorwärtskorrektur ist in Figur 9 gezeichnet. Hier wird das Ausgangssignal des Taktphasendetektors TD nicht von der Korrektur der Abtastphase beeinflußt, vielmehr wird das Ausgangssignal der Taktphasen-Korrekturschaltung TPK lediglich zur Einstellung der Abtastphase A im Datensignalzweig verwendet.

Die Anordnungen von Figuren 5 und 6 lassen viele Kombinationsmöglichkeiten von Mittelungsdauer m . T und Auswerteschaltung AS zu.

Beide Anordnungen mit ihren Kombinationen lassen sich für die Taktregelung nach Figur 1 und auch für die Taktvorwärtssteuerung nach Figur 9 verwenden.

Bei einer Rückkopplungsanbrdnung gemäß Figur 1 ist es günstig, m klein zu wählen, z.B. m = 1, und in der Auswerteschaltung AS nur eine grobe Quantisierung der Abtastphase durchzuführen entsprechend der Ansprüche 4, 5, 6 oder 7.

Der Realisierungsaufwand wird dann entsprechend klein.

Für die in Figur 9 wiedergegebene Vorwärtskorrektur des Taktes ist es allerdings notwendig, daß die Auswerteschaltung AS einen möglichst genauen linearen Schätzwert der Abtastphase liefert. Dies ist dann der Fall, wenn in der Schaltungsanordnung nach Figur 5 oder 6 die Mittlungszeit m . T groß ist, d.h. m groß, und in der Auswerteschaltung AS die Phase $\bar{\varphi}$ möglichst genau bestimmt wird, z.B. nach der Verfahrensweise gemäß Anspruch 3.

## Patentansprüche

1. Verfahren zur Taktsynchronisation in einem Empfänger für digitale Datenübertragung mit einem Taktphasendetektor, welchem die durch Tiefpaßfilterung die Signalterme der doppelten Frequenz nicht mehr enthaltenden In-Phase-Komponente und Quadratur-Komponente des demodulierten Empfangssignals, das aus dem Produkt des Empfangssignals mit dem Ausgangssignal des Trägeroszillators als Eingangssignal entstanden ist, eingegeben werden und wobei das Ausgangssignal als Steuersignal $u_{TI}$ für den Täktgenerator dient, wobei in dem Taktphasendetektor das demodulierte Empfangssignal mittels zweier Bandpässe in zwei komplexe Signale umgewandelt wird, welche mittels einer Verknüpfungsschaltung zu einem Steuersignal verknüpft wird, durch welches die Taktphasen-Korrekturschaltung des Taktgenerators angesteuert wird, <u>dadurch gekennzeichnet,</u> daß mittels einer 2. Verknüpfungsschaltung die Bandpaß-Ausgangssignale zu einem zweiten Steuersignal $u_{TR}$ derart verknüpft werden, daß die beiden Steuersignale $u_{TR}$ und $u_{TI}$ als Realteil und Imaginärteil einer komplexen Steuergröße $u_T = u_{TR} + ju_{TI}$ interpretiert werden können, daß die beiden Steuersignale $u_{TR}$ und $u_{TI}$ einer Mittelung (MW) unterzogen werden und daß anschließend die so gemittelten Werte $\bar{u}_{TR}$, $\bar{u}_{TI}$ mittels einer Auswerteschaltung (AS) ausgewertet werden zu einer Ansteuergräße $\delta$, mittels der die Taktphasen-Korrekturschaltung (TPK) angesteuert wird (Figur 5).

2. Verfahren nach Anspruch 1, <u>dadurch gekennzeichnet,</u> daß eine Abtastung mit der Abtastrate $f_S = 1/T$ mit der Schrittdauer T der Symbole vor oder nach der Demodulation oder nach dem Taktphasendetektorausgang erfolgt und daß die Mittelung der Steuersignale $u_{TR}$ und $u_{TI}$ über m Takte T, (m $\geq$ 1) erfolgt und daß nach der Mittelung die Abtastung mit der Abtastrate $f_S$ für m = 1 oder mit einer verringerten Abtastrate $f_S/m$ durchgeführt wird.

3. Verfahren nach Anspruch 1 oder 2, <u>dadurch gekennzeichnet,</u> daß die Auswertung nach der Beziehung $\delta = 0{,}5 . \bar{\varphi}/\pi$ mit $\bar{\varphi} = \text{arc tan } \bar{u}_{TI}/\bar{u}_{TR}$ erfolgt (Figuren 7a, b).

4. Verfahren nach einem der Ansprüche 1 oder 2, <u>dadurch gekennzeichnet,</u> daß die Auswertung derart erfolgt, daß untersucht wird, in welchem Phasenwinkelbereich $\bar{\varphi} = \text{arc tan } \bar{u}_{TI}/\bar{u}_{TR}$ der komplexe Zeiger $\bar{u}_T = \bar{u}_{TR} + j\bar{u}_{TI}$ sich befindet, daß bestimmten Phasenwinkelbereichen $\bar{\varphi}$ feste Phasenwerte $\varphi_Q$ zugewiesen werden und daß die Beziehung $\delta = 0{,}5 . \varphi_Q/\pi$ gilt (Figur 7c).

5. Verfahren nach Anspruch 4, <u>dadurch gekennzeichnet,</u> daß die Zuweisung nach folgender Tabelle erfolgt:

| $\bar{\varphi}$ | $\varphi_Q$ |
|---|---|
| $-\pi/16 \geq \bar{\varphi} \leq +\pi/16$ | 0 |
| $\pi/16 < \bar{\varphi} \leq \pi/4$ | $\pi/16$ |
| $\pi/4 < \bar{\varphi} \leq \pi/2$ | $\pi/4$ |
| $\pi/2 < \bar{\varphi} \leq \pi$ | $3\pi/4$ |
| $-\pi/16 > \bar{\varphi} \geq -\pi/4$ | $-\pi/16$ |
| $-\pi/4 > \bar{\varphi} \geq -\pi/2$ | $-\pi/4$ |
| $-\pi/2 > \bar{\varphi} > -\pi$ | $-3\pi/4$ |

(Figur 7d).

6. Verfahren nach Anspruch 1 oder 2, dadurch gekennzeichnet, daß die Auswertung derart erfolgt, daß das Vorzeichen der Steuergröße $u_{TI}$ untersucht und der Ansteuergröße nach der Beziehun $\delta = \delta_{min} \cdot \text{sign}(u_{TI})$ ein positiver oder negativer Minimalwert $\delta_{min} = 0{,}5 \cdot \varphi_{min}/\pi$ zugewiesen wird (Figuren 7e, 7f).

7. Verfahren nach einem der Ansprüche 1 bis 6, dadurch gekennzeichnet, daß bei der Auswertung zusätzlich ein Gebiet in der komplexen $u_{TR}$-,$u_{TI}$-Ebene definiert wird, in welchem eine Hysterese wirksam wird, derart, daß die Ansteuergröße $\delta$ über vorbestimmte Funktionen den aktuellen $u_{TR}$-, $u_{TI}$-Werten zuweisbar ist, wobei die Auswahl einer aus diesen Funktionen davon abhängt, aus welchem Gebiet außerhalb dieses definierten Gebiets der Eintritt in dieses erfolgt ist.

8. Verfahren nach Anspruch 6 und 7, dadurch gekennzeichnet, daß bei der Auswertung zusätzlich untersucht wird, ob $u_{TR}$ negativ ist, und daß, wenn dies der Fall ist, der Ansteuergröße $\delta$ für den Phasenbereich $\pi/2 < \bar{\varphi} < 3\pi/2$ (2. und 3 Quadrant der komplexen $u_{TR}$ -, $u_{TI}$-Ebene) ein Wert $\delta = \pm\alpha \cdot \delta_{min}$ zugewiesen wird, wobei $\alpha \geqq 1$ ist und wobei für den genannten Phasenbereich eine Hysterese wirksam wird derart, daß bei Phasenänderungen $\bar{\varphi}$ in mathematisch positivem Sinn der positive Minimalwert $+\delta_{min}$ des 1. Quadranten erhalten bleibt ($\alpha = 1$) oder vergrößert wird ($\alpha \rangle 1$) und daß bei Phasenänderungen $\bar{\varphi}$ in mathematisch negativem Sinn der negative Minimalwert $-\delta_{min}$ des 4. Quadranten erhalten bleibt ($\alpha = 1$) oder verkleinert wird ($\alpha > 1$) (Figuren 8a, 8b ).

9. Verfahren nach einem der Ansprüche 4 bis 7, dadurch gekennzeichnet, daß die Ansteuergröße $\delta$ einer Mittelung unterzogen wird, bevor sie der Taktphasen-Korrekturschaltung (TPK) zugeführt wird.

10. Verfahren nach Anspruch 2 und Anspruch 4, 5, 6, 7, 8 oder 9, dadurch gekennzeichnet, daß es angewandt wird in einer Rückkoppelschleifenanordnung (Figur 1).

11. Verfahren nach den Ansprüchen 2, 3 und 4, dadurch gekennzeichnet, daß es angewandt wird in Vorwärtskorrektureinrichtungen (Figur 9).

**Claims**

1. A clock pulse synchronisation method in a receiver for digital data transmissions including a timing error detector to which are fed the in-phase component and the quadrature component of the demodulated received signal which, as a result of lowpass filtering, no longer contain the signal terms of the double frequency and which are produced from the product of the received signal with the output signal of the carrier oscillator as the input signal, and wherein the output signal serves as control signal $u_{TI}$ for the clock pulse generator and wherein, by means of two bandpass filters, the demodulated received signal is converted in the timing error detector into two complex signals which are linked together by means of a linkage circuit to form a control signal for actuating the timing error correction circuit of the clock pulse generator, characterised in that,

by means of a second linkage circuit, the bandpass filter output signals are linked together to form a second control signal $u_{TR}$ in such a manner that the two control signals $u_{TR}$ and $u_{TI}$ can be interpreted as the real component and the imaginary component of a complex control value $u_T = u_{TR} + ju_{TI}$; the two control signals $u_{TR}$ and $u_{TI}$ are subjected to averaging (MW); and thereafter the thus averaged values $\overline{u}_{TR}$, $\overline{u}_{TI}$ are evaluated by means of an evaluation circuit (AS) to form an actuation value $\delta$ by means of which the timing error correction circuit (TPK) is actuated (Figure 5).

2. A method according to claim 1, characterised in that
sampling at the sampling rate $f_S = 1/T$ with a step duration T of the symbols takes place before or after demodulation or downstream of the timing error detector output; and the control signals $u_{TR}$ and $u_{TI}$ are averaged over m clock pulses T ($m \geq 1$); and after averaging sampling is effected at the sampling rate $f_S$ for m = 1 or at a reduced sampling rate $f_S/m$.

3. A method according to claim 1 or 2, characterised in that
the evaluation is effected according to the equation $\delta = 0.5 - \overline{\varphi}/\pi$, where $\overline{\varphi} = $ arc tan $\overline{u}_{TI}/\overline{u}_{TR}$ (Figures 7a, 7b).

4. A method according to one of claims 1 or 2, characterised in that
the evaluation is effected in such a manner that a determination is made as to in which phase angle region $\overline{\varphi}$ = arc tan $\overline{u}_{TI}/\overline{u}_{TR}$ the complex vector $\overline{u}_T = \overline{u}_{TR} + j\overline{u}_{TI}$ is to be found; fixed phase values $\varphi_Q$ are assigned to certain phase angle regions $\overline{\varphi}$; and the relationship $\delta = 0.5 \cdot \varphi_Q/\pi$ applies (Figure 7c).

5. A method according to claim 4, characterised in that
assignments are made according to the following table:

| $\overline{\varphi}$ | $\varphi_Q$ |
|---|---|
| $-\pi/16 \geq \overline{\varphi} \leq +\pi/16$ | 0 |
| $\pi/16 < \overline{\varphi} \leq \pi/4$ | $\pi/16$ |
| $\pi/4 < \overline{\varphi} \leq \pi/2$ | $\pi/4$ |
| $\pi/2 < \overline{\varphi} \leq \pi$ | $3\pi/4$ |
| $-\pi/16 > \overline{\varphi} \geq -\pi/4$ | $-\pi/16$ |
| $-\pi/4 > \overline{\varphi} \geq -\pi/2$ | $-\pi/4$ |
| $-\pi/2 > \overline{\varphi} > -\pi$ | $-3\pi/4$ |

(Figure 7d).

6. A method according to claim 1 or 2, characterised in that
the evaluation is effected in such a manner that the sign of the control value $u_{TI}$ is examined and a positive or negative minimum value $\delta_{min} = 0.5 \cdot \varphi_{min}/\pi$ is assigned to the actuation value according to the equation $\delta = \delta_{min} \cdot$ sign$(u_{TI})$ (Figures 7e, 7f).

7. A method according to one of claims 1 to 6, characterised in that,
during the evaluation, a region in the complex $u_{TR}, u_{TI}$ plane is additionally defined in which a hysteresis becomes effective in such a manner that the actuation value $\delta$ can be assigned, by way of predetermined functions, to the momentary $u_{TR}$ and $u_{TI}$ values, with the selection of one of said functions being dependent upon the area outside of said defined region from which said region is being entered.

8. A method according to claims 6 and 7, characterised in that
an additional examination is made during the evaluation as to whether $u_{TR}$ is negative and, if this is the case, the actuation value $\delta$ for the phase region $\pi/2 < \overline{\varphi} < 3\pi/2$ (second and third quadrants of the complex $u_{TR}, u_{TI}$ plane) is assigned a value of $\delta = \pm\alpha \cdot \delta_{min}$, where $\alpha \geq 1$, with a hysteresis becoming effective for said phase region in such a manner that, if there are changes in phase $\overline{\varphi}$ in a mathematically positive sense, the positive minimum value $+\delta_{min}$ of the first quadrant remains in effect ($\alpha = 1$) or is enlarged ($\alpha > 1$) and, if there are changes in phase $\overline{\varphi}$ in the mathematically negative sense, the negative minimum value $-\delta_{min}$ of the fourth quadrant

remains in effect ($\alpha$ = 1) or is reduced ($\alpha$ > 1) (Figures 8a, 8b).

9. A method according to one of claims 4 to 7, <u>characterised in that</u>
the actuation value $\delta$ is subjected to averaging before it is fed to the timing error correction circuit (TPK).

10. A method according to claim 2 and claim 4, 5, 6, 7, 8 or 9, <u>characterised in that</u>
it is employed in a feedback loop arrangement (Figure 1).

11. A method according to claims 2, 3 and 4, <u>characterised in that</u>
it is employed in forward correction devices (Figure 9).


## Revendications

1. Procédé pour la synchronisation de l'horloge dans un récepteur pour la transmission numérique de données, comprenant un détecteur de phase de l'horloge, à l'entrée duquel sont appliquées la composante en phase et la composante de quadrature du signal de réception démodulé, formé du produit du signal de réception et du signal de sortie de l'oscillateur du porteur en tant que signal d'entrée, les composantes ne contenant plus, par suite d'un filtrage passe-bas, les termes du signal de la double fréquence, procédé dans lequel le signal de sortie sert de signal de commande $u_{TI}$ pour le générateur d'horloge et dans lequel le signal de réception démodulé est converti à l'intérieur du détecteur de phase de l'horloge, au moyen de deux filtres passe-bas, en deux signaux complexes qui sont combinés à l'aide d'un réseau logique en un signal de commande par lequel est piloté le circuit correcteur de la phase de l'horloge du générateur d'horloge, <u>caractérisé en ce</u>
que les signaux de sortie des filtres passe-bas sont combinés à l'aide d'un deuxième réseau logique en un deuxième signal de commande $u_{TR}$ de manière que les deux signaux de commande $u_{TR}$ et $u_{TI}$ puissent être interprétés comme la partie réelle et la partie imaginaire d'une grandeur de commande complexe $u_T = u_{TR} + u_{TI}$, que les deux signaux de commande $u_{TR}$ et $u_{TI}$ sont soumis à la détermination d'une valeur moyenne (MW) et que les valeurs moyennes $\bar{u}_{TR}$, $\bar{u}_{TI}$ ainsi établies, sont exploitées au moyen d'un circuit d'exploitation (AS) pour fournir une grandeur de pilotage $\delta$ au moyen de laquelle est piloté le circuit correcteur de la phase de l'horloge (TPK) (Fig. 5).

2. Procédé selon la revendication 1, <u>caractérisé en ce</u>
qu'un échantillonnage s'effectue, à la fréquence d'échantillonnage $f_S$ = 1/T et avec la durée de pas T des symboles, avant ou après la démodulation ou à la suite de la sortie du détecteur de la phase de l'horloge et que la détermination de la moyenne des signaux de commande $u_{TR}$ et $u_{TI}$ s'effectue sur m cycles périodiques T (m $\cong$ 1) et que, après la détermination de la moyenne, l'échantillonnage est effectué à la fréquence d'échantillonnage $f_S$ pour m = 1 ou à une fréquence d'échantillonnage réduite $f_S$/m.

3. Procédé selon la revendication 1 ou 2, <u>caractérisé en ce</u>
que l'exploitation s'effectue selon la relation $\delta$ = 0,5 . $\bar{\varphi}/\pi$ avec $\bar{\varphi}$ = arc tan $\bar{u}_{TI}/\bar{u}_{TR}$ (Fig. 7a, b).

4. Procédé selon la revendication 1 ou 2, <u>caractérisé en ce</u>
que l'exploitation comprend une recherche pour établir dans quelle zone d'angle de phase $\bar{\varphi}$ = arc tan $\bar{u}_{TI}/\bar{u}_{TR}$ se trouve l'indicateur complexe $\bar{u}_T = \bar{u}_{TR} + j\bar{u}_{TI}$ et l'attribution de valeurs de phase $\varphi_Q$ fixes à des zones d'angle de phase $\bar{\varphi}$ déterminées, avec application de la relation $\delta$ = 0,5 . $\varphi_Q/\pi$ (Fig. 7c).

5. Procédé selon la revendication 4, <u>caractérisé en ce</u>
que l'attribution s'effectue d'après le tableau suivant:

|  | $Q$ |
|---|---|
| $-\tau/16 \geqslant \bar\varphi \leqslant +\tau/16$ | $0$ |
| $\tau/16 < \bar\varphi \leqslant \tau/4$ | $\pi/16$ |
| $\tau/4 < \bar\varphi \leqslant \tau/2$ | $\pi/4$ |
| $\tau/2 < \bar\varphi \leqslant \tau$ | $3\pi/4$ |
| $-\tau/16 > \bar\varphi \geqslant -\tau/4$ | $-\pi/16$ |
| $-\tau/4 > \bar\varphi \geqslant -\tau/2$ | $-\pi/4$ |
| $-\tau/2 > \bar\varphi > -\tau$ | $-3\pi/4$ |

(Fig. 7d)

6. Procédé selon la revendication 1 ou 2, <u>caractérisé en ce</u> que l'exploitation comprend l'examen du signe de la grandeur de commande $u_{TI}$ et l'attribution à la grandeur de pilotage, d'une valeur minimale positive ou négative $\delta_{min} = 0{,}5 \cdot \varphi_{min}/\pi$ selon la relation $\delta = \delta_{min} \cdot \text{sign}\,(u_{TI})$ (Fig. 7a, 7f).

7. Procédé selon une des revendications 1 à 6, <u>caractérisé en ce</u> qu'une zone supplémentaire est définie lors de l'exploitation dans le plan complexe $u_{TR}$, $u_{TI}$, dans laquelle une hystérésis entre en action, de manière que la grandeur de pilotage $\delta$ puisse être attribuée aux valeurs $u_{TR}$, $u_{TI}$ actuelles par le biais de fonctions préfixées, la sélection d'une de ces fonctions dépendant de la zone, située à l'extérieur de ladite zone définie, à partir de laquelle s'est effectuée l'entrée dans cette zone définie.

8. Procédé selon les revendications 6 et 7, <u>caractérisé en ce</u> que, lors de l'exploitation, il est examiné en plus si $u_{TR}$ est négatif et que, si cela est le cas, une valeur $\delta = \pm \alpha \cdot \delta_{min}$ est attribuée à la grandeur de pilotage $\delta$ pour le domaine de phase $\pi/2 < \bar\varphi < 3\pi/2$ (2e et 3e quadrants du plan complexe $u_{TR}$, $u_{TI}$), où $\alpha \geqq 1$, l'hystérésis devenant active pour le domaine de phase mentionné étant celle que, en cas de changements de phase $\bar\varphi$ dans le sens mathématiquement positif, la valeur minimale positive $+\delta_{min}$ du 1er quadrant soit maintenue ($\alpha = 1$) ou agrandie ($\alpha > 1$) et que, en cas de changements de phase $\bar\varphi$ dans le sens mathématiquement négatif, la valeur minimale négative $-\delta_{min}$ du 4e quadrant soit maintenue ($\alpha = 1$) ou réduite ($\alpha > 1$) (Fig. 8a, 8b).

9. Procédé selon une revendication 4 à 7, <u>caractérisé en ce</u> que la grandeur de pilotage $\delta$ est soumise à une détermination de la valeur moyenne avant qu'elle ne soit appliquée au circuit correcteur de phase de l'horloge (TPK).

10. Procédé selon les revendications 2 et 4, 5, 6, 7, 8, ou 9, <u>caractérisé en ce</u> qu'il est appliqué dans un dispositif à boucle de rétroaction (Fig. 1).

11. Procédé selon les revendications 2, 3 et 4, <u>caractérisé en ce</u> qu'il est appliqué dans des dispositifs de correction en avant (Fig. 9).

FIG. 1

FIG. 2

$\overline{U}_{TI}$

$-0.5$

$0.5$

$\varepsilon$

FIG. 3

Jm

$\overline{U}_{TI}$

$\vartheta$

$\overline{\varphi}$

Re

$\overline{U}_{TR}$

FIG. 4

$\overline{\varphi}$

$\pi$

$-0.5$

$0.5$

$\varepsilon$

$-\pi$

FIG. 5

FIG. 9

FIG. 6

FIG. 7a

FIG. 7b

FIG. 7c

FIG. 7d

FIG. 7e

FIG. 7f

FIG. 8a

$\bar{U}_{TI}$

$+\varphi_{min}$

$\pm\alpha\varphi_{min}$

$\bar{\varphi}$

$\bar{U}_{TR}$

$-\varphi_{min}$

FIG. 8b

$\varphi_Q$

$\alpha\cdot\varphi_{min}$

$\varphi_{min}$

$-3\pi/2$   $-\pi$   $-\pi/2$   $\pi/2$   $\pi$   $3\pi/2$   $\bar{\varphi}$